# EUROPEAN PATENT SPECIFICATION

(11) **EP 2 888 120 B1**
(45) Date of publication and mention of the grant of the patent: **20.06.2018**
(21) Application number: 13774223.5
(22) Date of filing: 22.08.2013
(51) Int. Cl.: B60D 1/06

(54) **CLAMPING DEVICE**
HALTEVORRICHTUNG
DISPOSITIF DE RETENUE

(30) Priority: 24.08.2012 GB 201215272
(43) Date of publication of application: 01.07.2015
(73) Proprietor: C.P. Witter Limited, Deeside Industrial Park Deeside CH5 2NY (GB)
(72) Inventor: DICKINSON, Martin, Deeside CH5 2NY (GB)
(74) Representative: Stoner, Gerard Patrick
(86) International application number: PCT/GB2013/000355
(87) International publication number: WO 2014/029956

(56) References cited:
- EP-A2- 0 320 202
- DE-U1- 9 113 527
- US-E- R E24 362

## Description

The present invention relates to a clamping or adapting device which is used, typically though not exclusively, to enable a vehicle to carry items such as bicycles or other items. Cycle carriers for use with domestic cars are well-known. Some carriers enable bicycles to be carried on a rack mounted to the roof of the vehicle; others enable mounting to a rack which is effectively suspended at the rear of the vehicle. A further genus of carrier makes use of the presence of a towbar on some vehicles by providing a rack which is mounted, via a suitable clamping device, to the ball of the towbar.

One such clamping device for a rack is shown in WO2010/086368 and comprises an over-centre clamping device which operates to create very large clamping forces around the ball of the towbar by the application of relatively small forces to a lever operating the clamping device. A further over-centre clamping device, also lever-operated to enable operation by low manual forces, is known from US 2011/0049208. Both of these clamping devices require careful adjustment to ensure that a sufficiently large clamping force is applied to the ball of the towbar to ensure that the rack attached to the clamping device is securely attached while, at the same time, avoiding applying an excessively large force which may damage the clamping device or the ball of the towbar, or both. Such adjustment is not trivial. Because the clamping forces are applied via a lever, it follows that the actual clamping force is difficult to establish from the force required to be applied to the lever to effect clamping. Accordingly, a reasonably refined degree of judgment must be applied to create the correct adjustment.

US Re 24,362 (previously US-A-2,726,099) describes a ball and socket hitch having a downwardly-open hollow metal frame, one end constituting a fixed clamping cup for gripping a towbar ball, and the other end fixing to a trailer. The ball is clamped against the fixed clamping cup by a movable clamping cup in the form of a shaped shoe mounted inside the frame shell, firstly pivotally to a transverse fixed shaft to swing down away from the ball on release, and secondly to a vertical connecting link engaging the shoe to lift it through a heavy coil spring determining clamping force. The top of the connecting link projects through an opening in the top of the frame shell, where a lever with a cam and catch is operable to lift the link and hence the shoe up into the clamped position.

As specified in claim 1, the invention provides a clamping device for the ball of a towbar having:
a frame to which a rack or other carrying device may be connected;
first and second clamping cups adapted to grip the ball of the towbar;
the first clamping cup being mounted to the frame via at least one pivotally mounted clamping adjuster arm, whereby pivoting of the clamping adjuster arm enables movement of the first clamping cup between clamped and unclamped positions;
a clamping bias, which applies a biasing force upon the clamping adjuster arm to urge the clamping adjuster arm from an unclamped to a clamped position.
a locking member, connected to the clamping adjuster arm at a point distal from the first clamping cup;
a friction clamp biased against the locking member so that, when the clamping bias urges the clamping adjuster arm to a clamped position, the friction clamp acts upon the locking member to prevent movement of the clamping adjuster arm against the action of the clamping bias; wherein
the second clamping cup is linearly retractable to urge the second clamping cup around the ball of the towbar with a predetermined force.

Accordingly, because the first clamping cup is urged against the tow ball by a biasing force, typically provided by a spring whose spring rate is selected so that the appropriate force is applied, the clamping force applied when the second clamping cup is brought into the clamping position is therefore always within an acceptable range. The embodiment therefore provides automated adjustment of the clamping force.

The first clamping cup can be mounted for motion between an unclamped and a clamped position via an over-centre pivot mechanism, the clamping bias applying a biasing force to the pivot mechanism to bias the first cup into the clamping position. The locking member can be pivotally mounted to the pivot mechanism to execute substantially linear motion during pivoting of the over-centre pivot mechanism.

Embodiments of the invention will now be described, by way of example, and with reference to the accompanying drawings, in which:
Fig. 1 is a perspective view of a clamping device according to an embodiment of the present invention;
Fig. 2 is a cutaway perspective view equivalent to the view of Fig. 1
Fig. 3 is a side view on III-III in Fig. 2;
Fig. 4 is a cutaway side view showing initial adjustment and engagement of the clamping cups with the tow ball;
Fig. 5 is a cutaway side view showing the final clamping position; and
Fig. 6 is a cutaway side view showing disengagement and release of the clamping device.

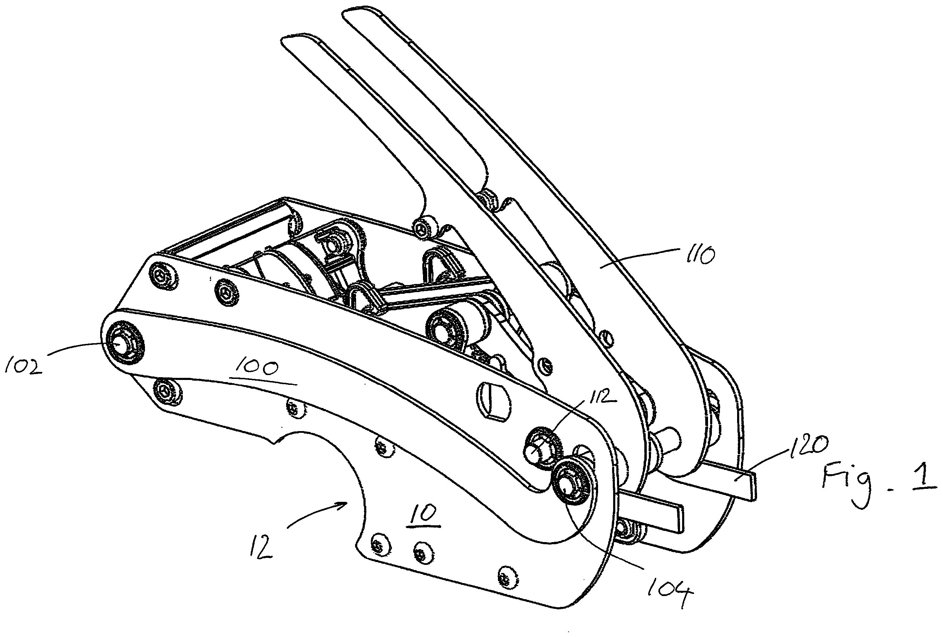

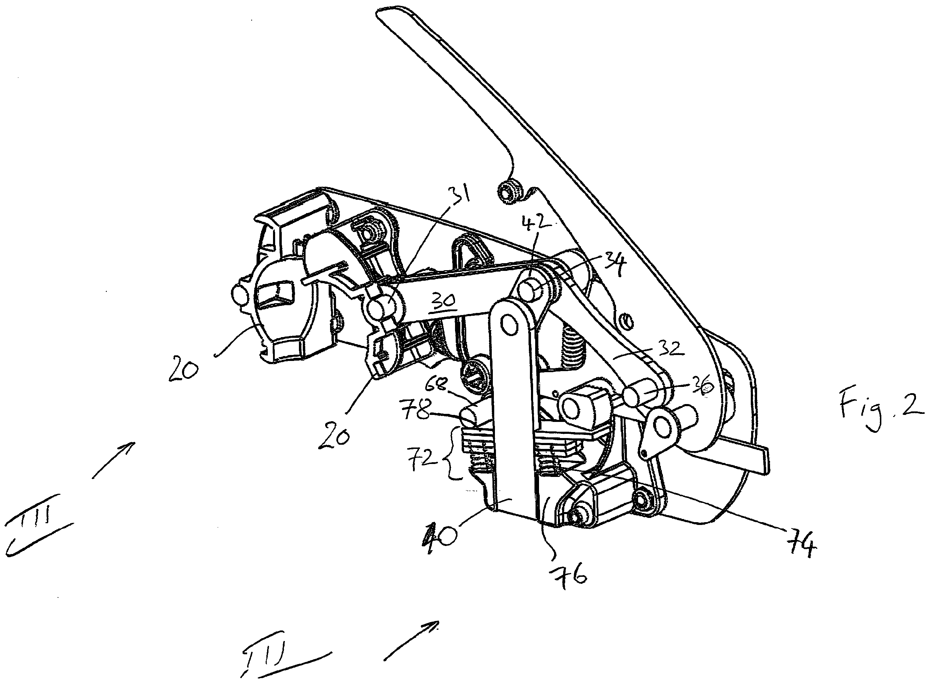

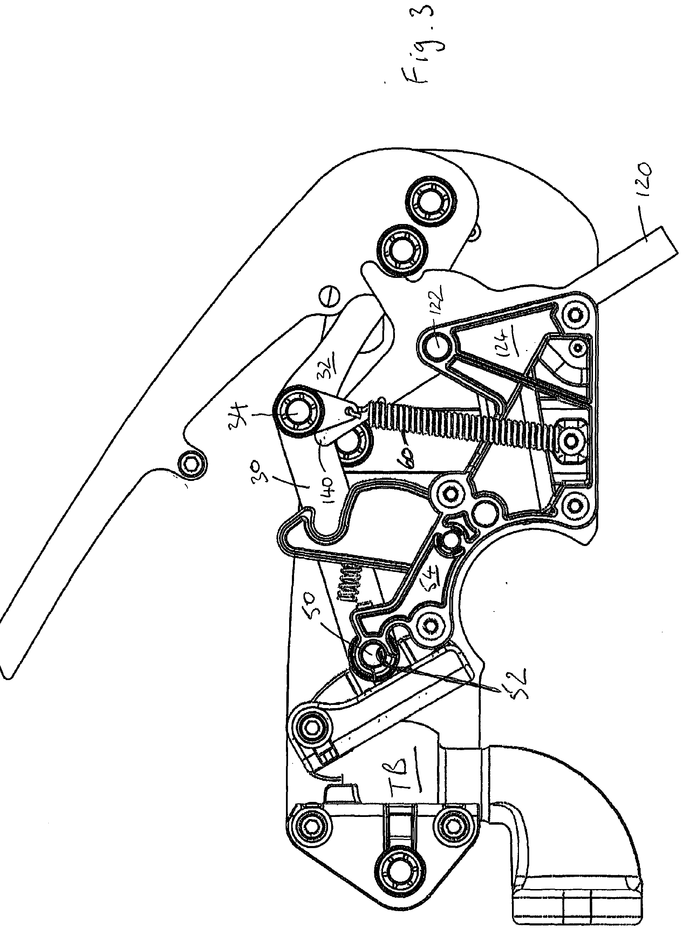

Referring now to Fig. 1, an embodiment of clamping device comprises a frame 10 provided by two side plates which are interconnected at various points along their length by suitable bolts and other connectors. In use, the frame 10 supports a rack which may, for example, be used to carry bicycles or such. Such a rack will typically be connected, eg by welding or some other suitable way, in a curved slot 12 in the base of the frame 10. Referring now additionally to Figs. 2 and 3, a pair of clamping cups 20 and 22 are engagable with the tow ball to clamp the device in position. The first clamping cup 20 is mounted to the frame via an automatically-adjusting dual pivot, over-centre locking mechanism. This mechanism comprises a first adjuster lever arm 30, pivotally connected at its proximal end by means of a cylindrical pivot bush 31 to the first clamping cup and, at its distal end to a pivot link 32 via an intermediate pivot bolt 34. The pivot link 32 is pivotally connected at the other end to the frame plates 10 via a pivot bolt 36. An elongate locking member, here having the form of a bar 40, is also pivotally mounted to the pivot bolt 34; in this embodiment via an intermediate link 42. An adjustable clamping bias, here having the form of a helical drive spring 60 acts upon the intermediate pivot bolt 34 to pull the distal end of the adjuster lever arm 30 downwards. Such a movement would 'elongate' or straighten the elbow formed by the adjuster lever arm 30 and the pivot link 32 and, accordingly, act to urge the first clamp to the left in Fig. 3.

When the device is in an unclamped position, the first clamping cup 20 is retained in its fully retracted position against the action of the clamping bias by the engagement of a lug 50 (which, in the present embodiment is a protrusion of the pivot bush 31 at the side of the first clamping cup 20) within a detent slot 52 located within a plate 54 which is fixedly mounted to the frame plates 10. Because the mouth of the detent slot 52 opens downwards, the lug 50 will not move out of the detent while the attitude of the first clamping cup 20 is cocked downwards as shown in clearly in Figs. 2 and 3.

The locking member 40 projects through apertures 70 located in the centre of each of a stack of adjuster plates 72. In use, these provide a friction clamp against the sides of the locking member 40 automatically to adjust the position of the locking member 40 and therefore the adjuster lever arm 30 (and thus the lateral extension of the first clamping cup 20) in a manner which will subsequently be explained. The adjuster plates are urged upwards by a bias, here provided by a pair of compression springs 74 located either side of the locking member 40 and which bear at their lower ends against a base 76 which is fixedly connected to the frame plates 10 (and therefore forms part of the same local 'mechanical earth' as the frame plates 10). The uppermost adjuster plate 78 bears, at its left hand side, against a fixed bar 68. Accordingly, the bias provided by the compression springs 74 causes the stack of adjuster plates 72 to cant over increasingly as the right hand side of the stack is urged upwards. This canting action causes the sides of the apertures 70 in each of the adjuster plates of the stack to bite against the sides of the locking member 40 and, in so doing, to apply a frictional clamping force which prevents upwards motion of the locking member 40 against the action of the clamping bias provided by the drive spring 60.

In use, the first clamping cup 20 is retained in its armed, retracted position. As the tow ball TB is offered into the first clamping cup 20, it will initially engage the upper inner surface of the cup 20. Thereafter, further movement of the ball TB into the cup, upwardly, will cause the cup to pivot about the point of initial engagement. This will then move the lug 50 downward out of the mouth of the detent slot 52 as the cup pivots about bush 31, thereby releasing the lug 50 from the detent slot 52. Once this has happened, there is no longer any force acting to prevent the drive spring 60 pulling the intermediate pivot 34 downward, and with it the distal end of the adjuster arm 30 to straighten the elbow provided by the adjuster lever 30 and pivot link 32. This will cause the first clamping cup 20 to move to the left and thus engage the ball TB with a force automatically determined by the drive spring 60.

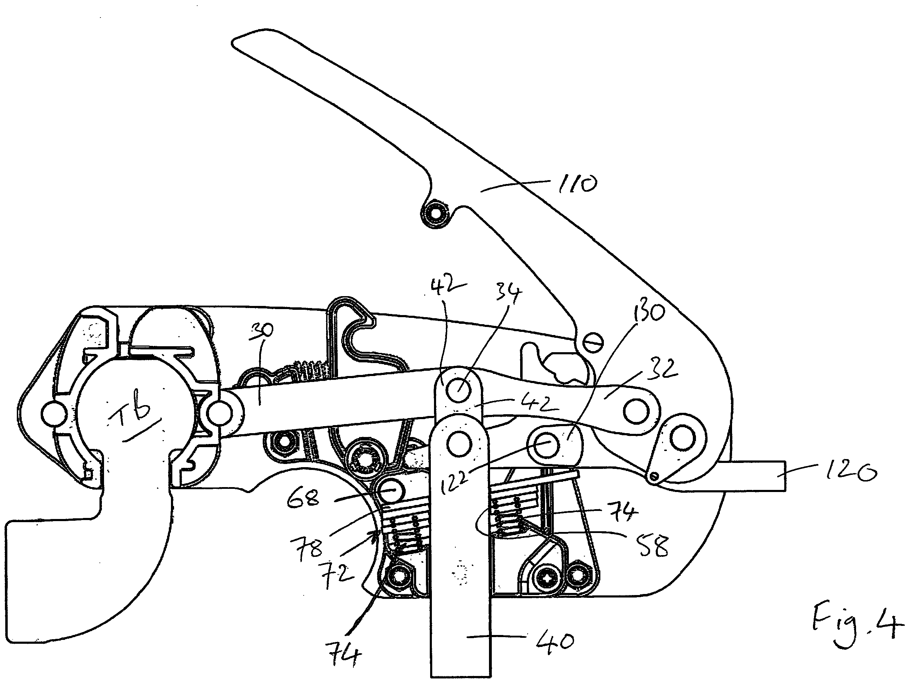

As this happens, the locking member 40 descends through the apertures 70 in the adjuster plates 72. The friction between the sides of the apertures 70 and the locking member 40 is overcome during this motion firstly because the locking member 40 is moving against the action of the clamping bias springs 74 and so acting to cause the adjuster plates 72 to adopt a less canted attitude which in turn reduces the extent of the friction, and secondly because the force of the drive spring 60 is sufficiently large to overcome any residual friction. By contrast, any attempted upward movement of the locking member 40 (which would also cause retraction of the first clamping cup 20 away from engagement with the ball TB) acts, because of the existing frictional force applied by the biting of the sides of the apertures 70 in the adjuster plates 72 with the locking member 40, to cause the adjuster plates 72 to cant over further and thus bite further into the sides of the locking member 40 and therefore to apply yet greater frictional force to prohibit upward motion of the locking member 40. The device has then adopted the position indicated in Fig. 4.

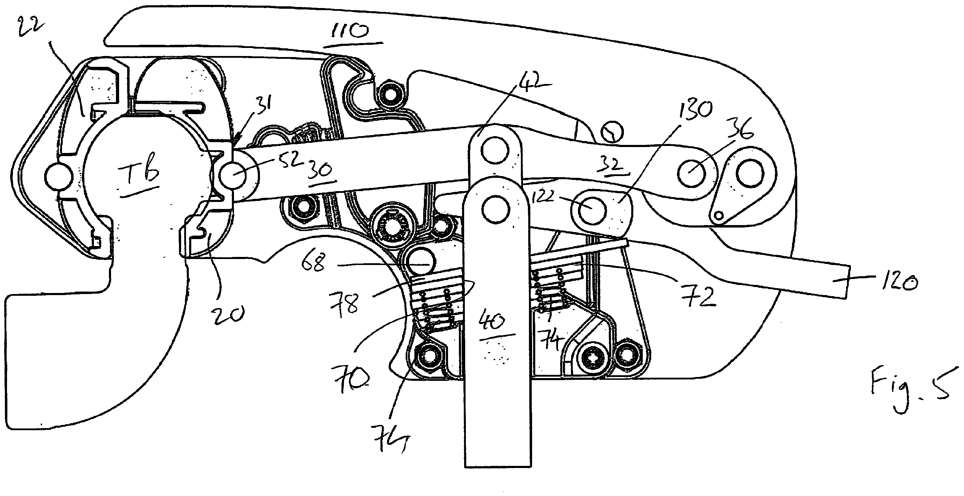

Referring now additionally to Fig. 5, once the drive spring 60 has caused the first clamping cup 20 to engage fully with the ball TB, the two clamping cups of the device are now in the correct adjustment. Full clamping of the device occurs by the controlled retraction of the second clamping cup 22 to the right. To facilitate this, the second clamping cup 22 is mounted at both sides to a retracting link 100 by means of bolts 102. The distal ends of the retracting links 100 are connected, via further bolts 104, to a manually operable clamping lever 110 which is pivotally mounted to the frame plates via pivot bolts 112. Because the bolts 104 which connect the retraction arms 100 to the manual clamping lever 110 are located firstly eccentrically with respect to the pivot point (i.e. the pivot bolts 112) of the manual clamping lever 110 and secondly rearwardly of that axis (having regard to the location of the second clamping cup 22), rotation of the clamping lever 110 causes a small rearward translation of the bolts 104 and thus the links 100 to which they are connected. This therefore results in the second clamping cup fully engaging with the ball TB.

Because, immediately prior to actuation of the manual clamping lever 110, the position of the first clamping cup and the force which it applies to the ball TB are, respectively, automatically set and applied by the action of the drive spring 60 and the first clamping cup 20 is retained in this position and continues to apply such a force by virtue of the friction clamp provided by the action of the adjuster plates 72 against the locking member 40, the first and second clamping cups can be considered as being in an optimal position. Accordingly, the force then applied by the closing of the manual clamping lever 110 and consequent retraction of the second clamping cup 22 provides an optimum clamping force which can, in effect, be set by the manufacturer rather than having to rely upon the refined judgment of a user to perform that adjustment.

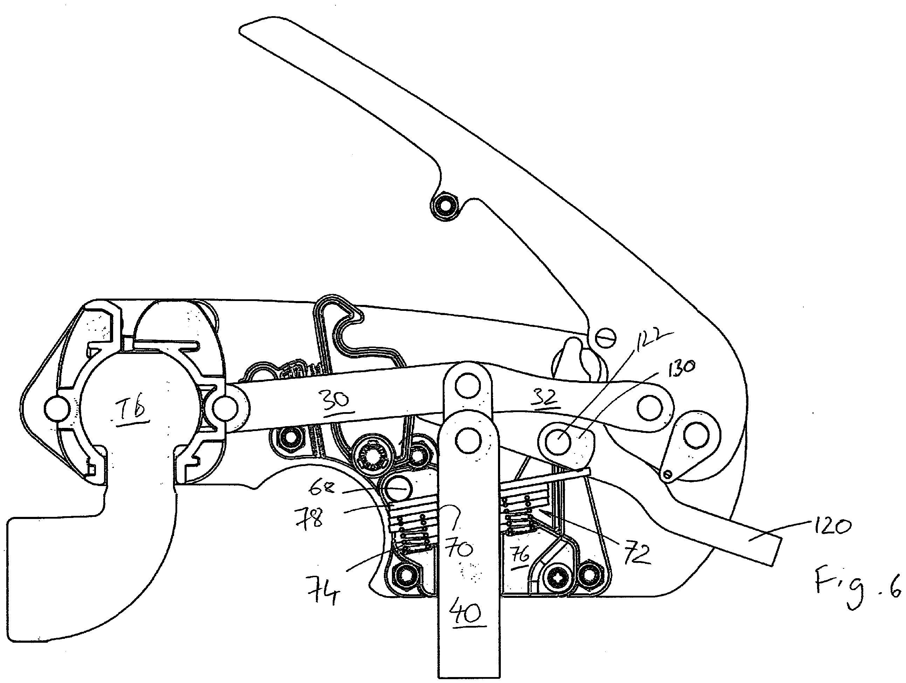

Referring now to Fig. 6, release of the device is achieved as follows. First, the manual clamping lever 110 is lifted. This simply reverses the lateral movement of the second clamping cup 22, moving it to the left and releasing the clamping force applied by engagement of the two cups 20, 22 around the ball TB. However, the ball TB is still not able to be released because the clearance between the two cups is insufficient to enable this to take place. Moreover, the position of the first clamping cup 20 is unable to be moved laterally to the right to create sufficient clearance to extract the ball TB because the adjuster plates 72 remain engaged with the locking member 40. It follows, therefore, that to release the ball TB it is necessary to facilitate disengagement of the adjuster plates 72 with the locking member 40.

Referring again to Fig. 3 and Fig. 6, such disengagement is performed by the action of a release pedal 120, which is pivotally mounted to the frame plates 10 via a pivot bush 122 supported on a plate 124. The release pedal 120 carries a small cam 130 and, as the free end of the pedal 120 is pushed downwards, the cam 130 engages with the right hand side of the uppermost adjuster plate 78. Further downward movement of the pedal and cam 130 causes the canting angle of the stack of adjuster plates 72 to flatten which, in turn, releases the frictional force between the insides of the apertures and the sides of the locking member 40 to reduce. The distal end of the pedal 120 extends beyond the pivot point provided by bush 122 and includes, at its end, a bearing point 140, Continued downward movement of the release pedal 120 causes the bearing point 140 to bear under the intermediate pivot bolt 34 and thereby apply an upward force to both the bolt and the locking member 40. Since the frictional force between the adjuster plates 72 and the locking member has now been released, the only force that must be overcome to cause the pivot bolt 34 and locking member 40 to move upwards is the force of drive spring 60. This can be overcome by force applied to the release pedal 120 so that full downward motion of the release pedal 120 causes both the release and elevation of the locking member 40. That elevation acts to retract the first clamping cup 20 until the lug 50 engages once again in the detent slot 52, thus returning the first clamping cup 20 back into its armed position whereupon the clamping device may be fully disengaged from the ball TB.

An advantageous feature of the embodiment described, though not an essential feature, is that, as a result of the pivoting mechanism used to retract and advance the first clamping cup and a frictional clamping force being applied to a member which extends from one of the levers of that mechanism, the frictional force applied by the adjuster plates to the locking member need only be a fraction of the force which is applied by the clamping cups around the ball TB (which, as a result of the large bending moment - applied by the weight of the rack carried by the clamping device - which the clamping device must support by frictional engagement with the ball alone, must be substantial.

In one embodiment, the adjuster plates are made of one of a zinc alloy coated metal and the locking member is of stainless steel. Alternatively, both the adjuster plates and the locking member may be of stainless steel. Other suitable metals made be used.

## Claims

1. A clamping device for the ball (TB) of a towbar, having:
a frame (10) to which a rack or other carrying device may be connected;
first and second clamping cups (20, 22) adapted to grip the ball of the towbar;
the first clamping cup (20) being mounted to the frame (10) via at least one pivotally mounted clamping adjuster arm (30), whereby pivoting of the clamping adjuster arm (30) enables movement of the first clamping cup (20) between clamped and unclamped positions;
a clamping bias (60), which applies a biasing force to the clamping adjuster arm (30) to urge the clamping adjuster arm (30) from an unclamped to a clamped position;
a locking member (40), connected to the clamping adjuster arm (30) at a point distal from the first clamping cup (20);
a friction clamp (72) biased against the locking member (40) so that, when the clamping bias (60) urges the clamping adjuster arm (30) to a clamped position, the friction clamp (72) acts upon the locking member (40) to prevent movement of the clamping adjuster arm (30, 32) relative to the frame (10) against the action of the clamping bias (60); wherein
the second clamping cup (22) is linearly retractable to urge the second clamping cup around the ball of the towbar (TB) with a predetermined force.

2. A device according to claim 1 wherein the friction clamp is continually biased against the locking member (40) during movement of the locking member caused by motion of the clamping adjuster arm (30) from the unclamped to the clamped position.

3. A device according to claim 2 wherein the friction clamp is releasable by means of a release lever (120).

4. A device according to claim 2 wherein the release lever (120) acts independently of the clamping adjuster arm (30).

5. A device according to any of the preceding claims wherein the end of the clamping adjuster arm (30) distal from the first clamping cup (20) is mounted to the frame via a further pivoting link (32).

6. A device according to claim 5 wherein the clamping adjuster arm (30) and the pivoting link (32) provide an over-centre locking mechanism to urge the first clamping cup (20) against the ball (TB).

7. A device according to any one of the preceding claims wherein the locking member (40) is pivotally mounted to the distal end of the clamping adjuster arm (30) for substantially translational motion along a direction of its length.

8. A device according to claim 7 wherein the friction clamp (72) is provided by at least one plate having an aperture (70) through which the locking member (40) extends and which is biased to pivot so that pivoting of the plate (72) causes the edges of the aperture (70) to bear against the locking member (40).

9. A device according to claim 8 wherein the bias on the at least one plate (72) acts in a direction opposite to the direction of movement of the locking member (40) through the friction clamp during movement of the first clamping cup (20) from the clamped to the unclamped position.

10. A device according to claim 9 wherein the bias on the at least one plate (72) of the friction clamp acts to pivot the plate upwards and the locking member (40) moves downwards during movement of the first clamping cup (20) from the unclamped to the clamped position.

11. A device according to claim 1 in which
the frame (10) is provided by side plates interconnected at points along their length,
a manually operable clamping lever (110) is pivotally mounted to said frame plates by pivot bolts (112), and, for said linear retractability,
the second clamping cup (22) is mounted at both sides to retracting links (100) by means of bolts (102), and
distal ends of the retracting links (100) are connected via further bolts (104) to the manually operable clamping lever (110), eccentrically with respect to the pivot bolts (112) and rearwardly of that axis, whereby rotation of the clamping lever (110) causes a small rearward translation of the further bolts (104) and the links (100) to which they are connected.

## Patentansprüche

1. Klemmvorrichtung für den Kugelkopf (TB) einer Anhängerkupplung, umfassend:
einen Rahmen (10), mit dem ein Rahmengestell oder eine andere Tragevorrichtung verbunden werden kann;
eine erste und eine zweite Klemmbacke (20, 22), die dazu geeignet sind, den Kugelkopf der Anhängerkupplung zu greifen;
wobei die erste Klemmbacke (20) über zumindest einen schwenkbar gelagerten Klemmeinstellungsarm (30) am Rahmen (10) montiert ist, wodurch das Schwenken des Klemmeinstellungsarms (30) die Bewegung der ersten Klemmbacke (20) zwischen einer Klemmposition und einer ungeklemmten Position ermöglicht;
eine Klemm-Vorspannvorrichtung (60), die eine Vorspannkraft an den Klemmeinstellungsarm (30) anlegt, um den Klemmeinstellungsarm (30) von einer ungeklemmten in eine Klemmposition zu bewegen;
ein Feststellelement (40), das mit dem Klemmeinstellungsarm (30) an einem distal von der ersten Klemmbacke (20) liegenden Punkt verbunden ist;
ein Reibungsklemmelement (72), das gegen das Feststellelement (40) vorgespannt ist, sodass, wenn die Klemm-Vorspannvorrichtung (60) den Klemmeinstellungsarm (30) in eine Klemmposition bewegt, das Reibungsklemmelement (72) auf das Feststellelement (40) wirkt, um eine Bewegung des Klemmeinstellungsarms (30, 32) relativ zum Rahmen (10) gegen die Wirkung der Klemm-Vorspannvorrichtung (60) zu verhindern; wobei die zweite Klemmbacke (22) linear rückholbar ist, um die zweite Klemmbacke mit einer vorbestimmten Kraft um den Kugelkopf der Anhängerkupplung (TB) zu drücken.

2. Vorrichtung nach Anspruch 1, wobei das Reibungsklemmelement während der Bewegung des Feststellelements, die von der Bewegung des Klemmeinstellungsarms (30) aus der ungeklemmten in die Klemmposition verursacht wird, kontinuierlich gegen das Feststellelement (40) vorgespannt wird.

3. Vorrichtung nach Anspruch 2, wobei das Reibungsklemmelement mittels eines Lösungshebels (120) lösbar ist.

4. Vorrichtung nach Anspruch 2, wobei der Lösungshebel (120) unabhängig vom Klemmeinstellungsarm (30) wirkt.

5. Vorrichtung nach einem der vorangegangenen Ansprüche, wobei das Ende des Klemmeinstellungsarms (30), das distal von der ersten Klemmbacke (20) angeordnet ist, über ein weiteres Schwenkverbindungselement (32) am Rahmen montiert ist.

6. Vorrichtung nach Anspruch 5, wobei der Klemmeinstellarm (30) und das Schwenkverbindungselement (32) einen Übertotpunkt-Feststellmechanismus bereitstellen, um die erste Klemmbacke (20) gegen den Kugelkopf (TB) zu drücken.

7. Vorrichtung nach einem der vorangegangenen Ansprüche, wobei das Feststellelement (40) schwenkbar am distalen Ende des Klemmeinstellungsarms (30) gelagert ist, um im Wesentlichen eine Translationsbewegung entlang einer Richtung seiner Länge auszuführen.

8. Vorrichtung nach Anspruch 7, wobei das Reibungsklemmelement (72) durch zumindest eine Platte bereitgestellt ist, die eine Öffnung (70) aufweist, durch die sich das Feststellelement (40) erstreckt, und die vorgespannt ist, um so zu verschwenken, dass ein Schwenken der Platte (72) bewirkt, dass die Ränder der Öffnung (70) gegen das Feststellelement (40) drücken.

9. Vorrichtung nach Anspruch 8, wobei während der Bewegung der ersten Klemmbacke (20) aus der Klemmposition in die ungeklemmte Position die Vorspannung auf der zumindest einen Platte (72) in einer Richtung wirkt, die der Richtung der Bewegung des Feststellelements (40) durch das Reibungsklemmelement entgegengesetzt ist.

10. Vorrichtung nach Anspruch 9, wobei während der Bewegung der ersten Klemmbacke (20) aus der ungeklemmten in die Klemmposition die Vorspannung auf der zumindest einen Platte (72) des Reibungsklemmelements wirkt, um die Platte nach oben zu schwenken, und sich das Feststellelement (40) nach unten bewegt.

11. Vorrichtung nach Anspruch 1, wobei
der Rahmen (10) von Seitenplatten bereitgestellt wird, die an Punkten entlang ihrer Länge miteinander verbunden sind,
ein manuell betätigbarer Klemmhebel (110) mit Schwenkbolzen (112) schwenkbar auf den Rahmenplatten gelagert ist, und - zur Erreichung der linearen Rückholbarkeit -
die zweite Klemmbacke (22) auf beiden Seiten mittels Bolzen (102) an Rückholverbindungselementen (100) montiert ist, und
distale Enden der Rückholverbindungselemente (100) über weitere Bolzen (104) mit dem manuell betätigbaren Klemmhebel (110) in Bezug auf die Schwenkbolzen (112) exzentrisch und hinter dieser Achse verbunden sind, wodurch eine Drehung des Klemmhebels (110) eine kleine, nach hinten gerichtete Translation der weiteren Bolzen (104) und der Verbindungselemente (100), mit denen sie verbunden sind, bewirkt.

## Revendications

1. Dispositif de serrage pour la boule (TB) d'une barre de remorquage, ayant :
un bâti (10) auquel une crémaillère ou un autre dispositif porteur peut être raccordé ;
des première et seconde coupelles de serrage (20, 22) adaptées pour saisir la boule de la barre de remorquage ;
la première coupelle de serrage (20) étant montée sur le bâti (10) via au moins un bras d'ajustement de serrage (30) monté de manière pivotante, moyennant quoi le pivotement du bras d'ajustement de serrage (30) permet le mouvement de la première coupelle de serrage (20) entre les positions serrée et desserrée ;
une sollicitation de serrage (60) qui applique une force de sollicitation sur le bras d'ajustement de serrage (30) pour pousser le bras d'ajustement de serrage (30) d'une position desserrée à une position serrée ;
un élément de verrouillage (40) raccordé au bras d'ajustement de serrage (30) au niveau d'un point distal par rapport à la première coupelle de serrage (20) ;
un collier de friction (72) sollicité contre l'élément de verrouillage (40) de sorte que, lorsque la sollicitation de serrage (60) pousse le bras d'ajustement de serrage (30) dans une position serrée, le collier de friction (72) agit sur l'élément de verrouillage (40) pour empêcher le mouvement du bras d'ajustement de serrage (30, 32) par rapport au bâti (10) contre l'action de la sollicitation de serrage (60) ; dans lequel :
la seconde coupelle de serrage (22) peut être rétractée, de manière linéaire, pour pousser la seconde coupelle de serrage autour de la boule de la barre de remorquage (TB) avec une force prédéterminée.

2. Dispositif selon la revendication 1, dans lequel le collier de friction est sollicité, de manière continue, contre l'élément de verrouillage (40) pendant le mouvement de l'élément de verrouillage provoqué par le mouvement du bras d'ajustement de serrage (30) de la position desserrée à la position serrée.

3. Dispositif selon la revendication 2, dans lequel le collier de friction est libérable au moyen d'un levier de libération (120).

4. Dispositif selon la revendication 2, dans lequel le levier de libération (120) agit indépendant du bras d'ajustement de serrage (30).

5. Dispositif selon l'une quelconque des revendications précédentes, dans lequel l'extrémité du bras d'ajustement de serrage (30) distale par rapport à la première coupelle de serrage (20) est montée sur le bâti via une autre de liaison de pivotement (32).

6. Dispositif selon la revendication 5, dans lequel le bras d'ajustement de serrage (30) et la liaison de pivotement (32) fournissent un mécanisme de verrouillage décentré pour pousser la première coupelle de serrage (20) contre la boule (TB).

7. Dispositif selon l'une quelconque des revendications précédentes, dans lequel l'élément de verrouillage (40) est monté, de manière pivotante, sur l'extrémité distale du bras d'ajustement de serrage (30) pour un mouvement de translation sensible le long d'une direction de sa longueur.

8. Dispositif selon la revendication 7, dans lequel le collier de friction (72) est fourni par au moins une plaque ayant une ouverture (70) à travers laquelle l'élément de verrouillage (40) s'étend et qui est sollicité pour pivoter de sorte que le pivotement de la plaque (72) amène les bords de l'ouverture (70) à s'appuyer contre l'élément de verrouillage (40).

9. Dispositif selon la revendication 8, dans lequel la sollicitation sur la au moins une plaque (72) agit dans une direction opposée à la direction de mouvement de l'élément de verrouillage (40) par le biais du collier de friction pendant le mouvement de la première coupelle de serrage (20) de la position serrée à la position desserrée.

10. Dispositif selon la revendication 9, dans lequel la sollicitation sur au moins une plaque (72) du collier de friction agit pour faire pivoter la plaque vers le haut et l'élément de verrouillage (40) se déplace vers le bas pendant le mouvement de la première coupelle de serrage (20) de la position desserrée à la position serrée.

11. Dispositif selon la revendication 1, dans lequel :
le bâti (10) est fourni par des plaques latérales interconnectées à des points le long de leur longueur,
un levier de serrage (110) pouvant être actionné manuellement, est monté, de manière pivotante, sur lesdites plaques de bâti par des boulons de pivot (112) et pour ladite rétractabilité linéaire,
la seconde coupelle de serrage (22) est montée des deux côtés sur des liaisons de rétraction (100) au moyen des boulons (102), et
des extrémités distales des liaisons de rétractions (100) sont raccordées via d'autres boulons (104) au levier de serrage (110) pouvant être actionné manuellement, de manière excentrique par rapport aux boulons de pivot (112) et vers l'arrière de cet axe, moyennant quoi la rotation du levier de serrage (110) provoque une petite translation vers l'arrière des boulons supplémentaires (104) et des liaisons (110) auxquelles ils sont raccordés.
